# EUROPÄISCHE PATENTSCHRIFT

(11) **EP 3 477 154 B1**
(45) Veröffentlichungstag und Bekanntmachung des Hinweises auf die Patenterteilung: **15.12.2021**
(21) Anmeldenummer: 18200037.2
(22) Anmeldetag: 12.10.2018
(51) Int. Cl.: F16H 7/12

(54) **SPANNVORRICHTUNG**
CLAMPING DEVICE
DISPOSITIF DE SERRAGE

(30) Priorität: 24.10.2017 DE 102017124783
(43) Veröffentlichungstag der Anmeldung: 01.05.2019
(73) Patentinhaber: Muhr und Bender KG, 57439 Attendorn (DE)
(72) Erfinder: Pfeifer, Simon, 58840 Plettenberg (DE); Stephan, Fabian, 57439 Attendorn (DE)
(74) Vertreter: Neumann Müller Oberwalleney & Partner Patentanwälte

(56) Entgegenhaltungen:
- EP-A1- 3 023 670
- EP-A2- 2 128 489
- WO-A1-2014/100894
- FR-A1- 2 781 008

## Beschreibung

Die Erfindung betrifft eine Spannvorrichtung für ein Zugmitteltrieb, insbesondere mit zugmittelgetriebenem Starter-Generator.

Ein Zugmitteltrieb umfasst üblicherweise ein endloses Zugmittel und zumindest zwei Antriebsscheiben, von denen eine als Antrieb und eine als Abtrieb des Zugmitteltriebs fungieren kann. Derartige Zugmitteltriebe kommen beispielsweise an Verbrennungsmotoren eines Kraftfahrzeugs zum Antreiben von Nebenaggregaten zum Einsatz, wobei eine erste Antriebsscheibe auf der Kurbelwelle des Verbrennungsmotors sitzt und das Zugmittel antreibt. Weitere Antriebsscheiben sind den Nebenaggregaten zugeordnet, wie beispielsweise Wasserpumpe, Lichtmaschine oder Klimaanlagenkompressor, und werden vom Zugmittelantrieb drehend angetrieben. Bei herkömmlichen Zugmittelantrieben sind die Nebenaggregate als Verbraucher ausgelegt, das heißt sie werden von der Antriebsscheibe der Kurbelwelle über das Zugmittel angetrieben. Dabei ist zwischen der Kurbelwelle und dem in Umlaufrichtung des Zugmittels benachbarten Aggregat, in der Regel der Generator, das Lostrum ausgebildet. Um hier eine ausreichende Umschlingung des Zugmittels um die Antriebsscheibe zu gewährleisten, wird das Zugmittel mittels einer Spannrolle der Spannvorrichtung vorgespannt.

Aus der EP 3 023 670 A1, entsprechend der DE 10 2014 117 094 A1, ist eine Riemenspannvorrichtung mit einem Grundkörper und zwei Spannarmen bekannt, die jeweils einen Spannrolle aufweisen und an dem Grundkörper schwenkbar gelagert sind. Die beiden Spannarme sind mittels einer Bügelfeder in Umfangsrichtung gegeneinander vorgespannt, die eine Umfangserstreckung von weniger als 360° um die Schwenkachse aufweist.

Aus der FR 2 781 008 A1 ist eine Riemenspannvorrichtung mit zwei Trägerelementen bekannt, die jeweils einen Spannrolle aufweisen. Die beiden Trägerelemente sind scherenartig um einer Schwenkachse gelagert. Zwischen den zu den Spannrollen entgegengesetzten freien Enden der Trägerelemente ist eine Schraubenfeder angeordnet, welche die Trägerelemente federnd beaufschlagt.

Aus der EP 2 128 489 A2 ist eine Riemenspannvorrichtung für einen Riementrieb mit Starter-Generator bekannt. Die Riemenspannvorrichtung weist ein Gehäuse auf, in dem zwei Spannarme um eine Schwenkachse schwenkbar gelagert sind. Die Spannarme sind mit Federmitteln gegeneinander abgestützt.

Aus der WO 2014/100894 A1 ist eine Riemenspannvorrichtung mit einem Grundkörper, einem hieran drehbar gelagerten ersten Spannarm sowie einem an dem ersten Spannarm schwenkbar gelagerten zweiten Spannarm bekannt. Es ist eine Dämpfungsstruktur vorgesehen, um den ersten Spannarm gegenüber dem Grundkörper zu dämpfen. Die Dämpfungsstruktur umfasst in einer Ausführungsform eine Tellerfeder, die zwischen dem ersten Spannarm und dem Grundkörper mit axialer Vorspannung angeordnet ist. In einer anderen Ausführungsform sind eine erste und zweite Ringbuchse vorgesehen, die axial vorspannbar sind, um eine Drehbewegung des ersten Spannarms gegenüber dem Gehäuse zu dämpfen.

Zugmitteltriebe in Form von Riementrieben für ein Kraftfahrzeug benötigen je nach Fahrzustand (Teillast, Volllast, Start, Boost, Rekuperation, Segeln, etc.) unterschiedliche Trumkräfte, um einen Schlupf des Riemens zu vermeiden. Dies gilt insbesondere für Riementriebe in Hybridfahrzeugen mit Starter-Generator-Funktion. In heutigen Riementrieben wird das erforderliche Mindestmaß an Trumkräften aller Fahrzyklen zu jedem Zeitpunkt auf das Zugmittel aufgebracht, was insgesamt zu einer hohen Walkarbeit am Riemen führt.

Der vorliegenden Erfindung liegt die Aufgabe zugrunde, eine Spannvorrichtung für ein Zugmitteltrieb vorzuschlagen, die eine Auslegung auf möglichst geringe Trumkräfte des Zugmitteltriebs ermöglicht und damit zu einer höheren Effizienz beziehungsweise geringeren Verlusten führt.

Zur Lösung wird eine Spannvorrichtung zum Spannen eines Zugmittels eines Zugmitteltriebs vorgeschlagen, umfassend die Merkmale des Anspruchs 1. Die Spannvorrichtung ist beispielsweise für Riementriebe von Kraftfahrzeugen verwendbar, kann aber auch für beliebige andere Zugmitteltriebe eingesetzt werden. Ein Vorteil der Spannvorrichtung ist, dass die nominale Spannkraft der Spannvorrichtung möglichst gering ausgelegt werden kann. Die nominale Spannkraft wird durch die erste Feder definiert, die in dem ersten Spannwinkelbereich zwischen dem ersten und zweiten Spannarm alleine wirksam ist. Erst bei größeren Spannwinkeln, die in besonderen Fahrzuständen wie beispielsweise bei Zuschaltung eines Elektroantriebs (Boost) oder Rekuperieren von mechanischer in elektrische Energie auftreten können, wird die zweite Feder aktiviert und erzeugt eine zusätzliche Spannkraft zwischen den beiden Spannarmen. Je nach Auslenkungswinkel zwischen den beiden Spannarmen wird eine kleinere Spannkraft, nur durch die erste Feder, oder eine größere Spannkraft durch die erste und zweite Feder auf die Spannrollen und damit auf das Zugmittel ausgeübt. Die Federvorspannung kann vom Spannsystem abhängig von der Rollenposition, der Stellung der Spannarme und/oder des Fahrzustands unmittelbar erhöht werden, um einen Schlupf des Zugmittels zu vermeiden.

Zwischen dem ersten Spannwinkelbereich und dem zweiten Spannwinkelbereich kann ein zweiter Winkel definiert sein, bei dem eine auf die Spannarme wirkende resultierende Federkraft sprunghaft ansteigt. Im ersten Spannwinkelbereich, der Spannwinkel in Nominalstellung beziehungsweise bei Normalbetrieb umfasst, ist von der Federanordnung nur die erste Feder aktiv. Bei Erreichen des zweiten Winkels über Nominalstellung wird die zweite Feder vom zweiten Spannarm mitgenommen, so dass eine höhere Spannkraft beziehungsweise eine höhere Trumkraft induziert wird. Der zweite Winkel kann auch als Mitnahme- oder Eingriffswinkel bezeichnet werden.

Im Gleichgewichtszustand ist ein erster Spannwinkel zwischen dem ersten Spannarm und dem zweiten Spannarm eingeschlossen, der auch als Gleichgewichts--Spannwinkel bezeichnet werden kann. Als Gleichgewichtszustand wird insbesondere der Zustand verstanden, den die Spannarme in eingebautem Zustand der Spannvorrichtung im Riementrieb bei aufgelegtem Riemen ohne weitere Krafteinwirkung einnehmen. Bei Normalbetrieb, das heißt im statischen Betriebszustand des Riementriebs, nehmen die Spannarme eine Normalbetriebsstellung ein, in der zwischen den Spannarmen ein Normalbetriebsspannwinkel eingeschlossen ist. Der erste Spannwinkel (Gleichgewichtswinkel) und der Normalbetriebswinkel liegen innerhalb des ersten Spannwinkelbereichs. Der zweite Spannwinkel (Eingriffswinkel), und damit der Beginn des zweiten Spannwinkelbereichs kann insbesondere so eingestellt werden, dass er kleiner ist als die Summe aus erstem Spannwinkel plus 20°, vorzugsweise kleiner als erster Spannwinkel plus 15°. Besonders günstig ist es, wenn der zweite Spannwinkel möglichst kurz hinter dem Normalbetriebswinkel liegt, insbesondere maximal 10°, vorzugsweise maximal 5° über dem Normalbetriebswinkel. Die angegebenen Winkelangaben beziehen sich auf die Winkel, die ein Spannarm mit dem anderen Spannarm einschließt beziehungsweise um die Drehachse von zumindest einem der Spannarme zurücklegt.

Vorzugsweise ist die zweite Feder mit Federvorspannung verbaut, was sich insbesondere auch schon auf den ersten Spannwinkelbereich bezieht. Auf diese Weise ist die zweite Feder, wenn der zweite Spannwinkelbereich erreicht wird, bereits auf einem höheren Kraftniveau, so dass die Spannkräfte und damit die Trumkräfte entsprechend erhöht sind. Die erste Feder bewirkt beim größten Spannwinkel des ersten Spannwinkelbereichs eine erste Federkraft zwischen den beiden Spannarmen, und die zweite Feder bewirkt bei einem kleinsten Spannwinkel des zweiten Spannwinkelbereichs eine zusätzliche zweite Federkraft zwischen den beiden Spannarmen. Dabei addiert sich die zweite Federkraft auf die erste Federkraft, so dass die zwischen den Spannarmen wirkende resultierende Federkraft und damit auch das resultierende Federdrehmoment insgesamt erhöht ist. Das Kraftniveau ab Erreichen des zweiten Spannwinkelbereichs lässt sich durch entsprechende Auslegung der zweiten Feder einstellen. Beispielsweise kann die von der zweiten Feder erzeugte Kraft größer als ein Drittel der ersten Federkraft sein, insbesondere größer als die Hälfte, gegebenenfalls sogar der Federkraft der ersten Feder entsprechen oder größer sein.

Nach einer möglichen Ausführungsform können Einstellmittel zum Einstellen des ersten Spannwinkelbereichs beziehungsweise des zweiten Spannwinkels vorgesehen sein. Mit den Einstellmitteln kann der Winkelbereich eingestellt werden, bis zu dem nur die erste Feder wirksam ist beziehungsweise ab dem die zweite Feder aktiviert wird. Die Einstellmittel können beispielsweise in Form von Schraubmitteln gestaltet sein, mit denen sich die Abstützung der zweiten Feder gegenüber dem ersten Spannarm verstellen lässt.

Nach einer Ausführungsform ist die erste Feder mit einem ersten Federende gegen den ersten Spannarm und mit einem zweiten Federende gegen den zweiten Spannarm abgestützt. Wenn die Spannarme relativ zueinander aufgrund von auftretenden oder wechselnden Trumkräften verschwenkt werden, wird die Feder aufgeweitet und beaufschlagt die beiden Spannarme aufeinander zu. Die erste Feder kann in Axialansicht spiegelsymmetrisch gestaltet sein, was auch für die zweite Feder zumindest für einen Federteilabschnitt gelten kann.

Die Ausgestaltung und Anordnung der zweiten Feder kann an die technischen Erfordernisse und Bauraumverhältnisse entsprechend angepasst werden, wobei verschiedene Ausführungen denkbar sind. Es können beispielsweise zwei Federn mit gleicher Federcharakteristik verwendet werden, von denen die Federkraft einer Feder ausreicht, um den Riemen unter Berücksichtigung aller Aggregate-, Riemen- und Federtoleranzen statisch schlupffrei zu spannen. Alternativ hierzu können auch mehrere unterschiedliche starke Federn verwendet werden, durch deren Parallelschaltung für jeden kritischen Fahrzustand die jeweils passende Trumkraft bereitgestellt wird.

Nach einer ersten Möglichkeit ist die zweite Feder ähnlich ausgebildet, wie die erste Feder, womit insbesondere gemeint ist, dass die sich zwischen den beiden Stützabschnitten erstreckenden Biegeabschnitte der ersten und zweiten Feder eine vergleichbare Länge und/oder einen vergleichbaren Verlauf aufweisen. Die zweite Feder kann mit einem ersten Federende gegen den ersten Spannarm in einer ersten Drehrichtung abgestützt sein. Das entgegengesetzte zweite Federende ist bei Spannwinkeln innerhalb des ersten Spannwinkelbereichs in der entgegengesetzten zweiten Drehrichtung ebenfalls gegen den ersten Spannarm abgestützt, so dass die zweite Feder bei Schwenkbewegungen innerhalb des ersten Spannwinkelbereichs keine Kraft auf den zweiten Spannarm ausübt. Bei größeren Auslenkungen der beiden Spannarme gegeneinander in den zweiten Spannwinkelbereich hinein kommt die zweite Feder in abstützendem Kontakt mit dem zweiten Spannarm. Dabei wird die zweite Feder vom zweiten Spannarm in der zweiten Drehrichtung mitgenommen, so dass das zweite Federende von dem ersten Spannarm abhebt. Hierfür kann die zweite Feder einen ausgeformten Stützabschnitt aufweisen, der bei Schwenkbewegungen innerhalb des ersten Spannwinkelbereichs kontaktfrei gegenüber dem zweiten Spannarm ist und bei Schwenkbewegungen im daran anschließenden zweiten Spannwinkelbereichs gegen den zweiten Spannarm in Drehrichtung abgestützt ist und von diesem beaufschlagt wird. Die zweite Feder kann zwischen dem zweiten Federende und dem zweiten Stützabschnitt einen ausgeformten Führungsabschnitt aufweisen, der mit einem Führungsteil des zweiten Spannarms bei Verschwenken der beiden Spannarme innerhalb des ersten Spannwinkelbereichs zusammenwirken kann. Der Führungsabschnitt ist insbesondere so ausgestaltet, dass die zweite Feder am Führungsteil des Spannarms axial abgestützt beziehungsweise geführt ist. Das zweite Federende der zweiten Feder ist bei kleineren zwischen den beiden Spannarmen eingeschlossenen Winkeln zumindest mittelbar gegen den ersten Spannarm in Drehrichtung abgestützt und hebt bei größeren Winkeln von der Abstützung ab. Um eine ungewünschte Geräuschentwicklung bei erneutem Rückfedern und in Kontaktkommen gegen den ersten Spannarm zu vermeiden können Dämpfungsmittel vorgesehen sein. Die Dämpfungsmittel sind ausgestaltet, um eine Anschlagbewegung des zweiten Federendes gegen den ersten Spannarm zu dämpfen. Beispielsweise können die Dämpfungsmittel in Form eines Prellblocks oder einer Hülse mit integriertem elastischen Element gestaltet sein. Nach einer möglichen Ausführungsform können die Dämpfungsmittel zum Dämpfen einer Anschlagbewegung und die Einstellmittel zum Einstellen des Aktivierungswinkels für die zweite Feder integral als eine Einstell-Dämpfungs-Vorrichtung gestaltet sein.

Nach einer zweiten Möglichkeit kann die zweite Feder in einer Teleskop-Halterung aufgenommen sein, welche zwischen den beiden Spannarmen wirkend angeordnet ist. Die aus Feder und Teleskop-Halterung gebildete Einheit kann auch als Teleskop-Federeinheit bezeichnet werden. Es ist insbesondere vorgesehen, dass das erste Ende der Teleskop-Halterung an dem ersten Spannarm schwenkbar abgestützt ist und das zweite Ende der Teleskop-Halterung an dem zweiten Spannarm schwenkbar abgestützt ist. Die Feder ist derart in der Halterung mit Vorspannung eingebaut, dass die Feder in einem ersten Teleskopwegbereich, der dem ersten Schwenkwinkelbereich der Spannarme entspricht, kraftfrei in Bezug auf eine Abstützung der beiden Spannarme ist, und in einem zweiten Teleskopwegbereich, der dem zweiten Schwenkwinkelbereich der Spannarme entspricht, aus der vorgespannten Position weiter beaufschlagt wird, so dass die zweite Feder eine Federkraft zwischen den beiden Spannarmen ausübt. Es ist insbesondere vorgesehen, dass die Teleskop-Halterung ein erstes Teil und ein zweites Teil umfasst, die relativ zueinander teleskopierbar sind, wobei ein erstes Ende der zweiten Feder gegen das erste Teil der Teleskop-Halterung axial abgestützt ist und ein zweites Ende der zweiten Feder gegen das zweite Teil der Teleskop-Halterung axial abstützbar ist.

Die erste Feder kann beispielsweise in Form einer Bügelfeder gestaltet sein, die im Einbauzustand eine Umfangserstreckung um die Schwenkachsen der Spannarme von weniger als 360°, insbesondere von weniger als 330° aufweisen kann. Die Bügelfeder hat an ihren Enden jeweils einen Stützabschnitt, mit dem die Feder an dem jeweiligen Spannarm in Umfangsrichtung abgestützt ist, um die beiden Spannarme gegeneinander zu beaufschlagen. Die Stützabschnitte können bogenförmig gestaltet sein und in einer entsprechenden Umfangsnut am zugehörigen Spannarm einsitzen, so dass die erste Feder in axialer Richtung und in Umfangsrichtung durch die Aufnahme in den beiden Umfangsnuten der beiden Spannarme fixiert ist. Zwischen den beiden Stützabschnitten liegt ein Federabschnitt, in dem beim elastischen Aufweiten der Feder potentielle Energie gespeichert wird. Der Federabschnitt, welcher auch als Bügelabschnitt bezeichnet werden kann, wird beim elastischen Aufweiten insbesondere auf Biegung beansprucht, weswegen die Feder auch als Biegefeder bezeichnet werden kann. Der Federabschnitt erstreckt sich zwischen den beiden Endabschnitten etwa kreisbogenförmig in Umfangsrichtung um eine Federachse, die im Einbauzustand etwa in der Nähe und / oder im Wesentlichen parallel zur Schwenkachse der beiden Spannarme liegt. Dabei ist ein mittlerer Radius des Federabschnitts größer als ein die Öffnung umgebender ringförmiger Teil der Spannvorrichtung, so dass zwischen letzterem und dem Federabschnitt ein radialer Spalt gebildet ist. Im entspannten Zustand kann die Feder einen mittleren Radius aufweisen, der kleiner ist als ein Achsabstand zwischen einer Schwenkachse der Spannarme und einer Drehachse der Spannrolle. Im Einbauzustand kann die Bügelfeder einen mittleren Radius aufweisen, der größer ist als der Achsabstand zwischen der Schwenkachse und der Drehachse. Der zwischen den beiden Spannarmen eingeschlossene Spannwinkel hängt von der individuellen Einbausituation an dem Aggregat ab und kann im Einbauzustand kleiner als 90° sein. Die erste und / oder zweite Feder kann aus Runddraht oder Rechteckdraht hergestellt sein. Die zweite Feder kann, wie oben beschrieben, zwischen den beiden Stützabschnitten entsprechend der ersten Feder ausgeführt sein.

Der Grundkörper kann eine Öffnung aufweisen, die derart gestaltet ist, dass eine Antriebswelle und/oder Antriebsriemenscheibe eines Aggregats sich in die Öffnung berührungslos hineinerstrecken kann. Der Grundkörper kann einen Befestigungsabschnitt zum Befestigen der Riemenspannvorrichtung an einem ortsfesten Bauteil, beispielsweise dem Aggregat oder Motorgehäuse aufweisen. Der Befestigungsabschnitt kann nach einer beispielhaften Ausführungsform flanschartig von einem Ringabschnitt, durch den die Antriebswelle geführt ist, abstehen. Günstig ist es, wenn der Befestigungsabschnitt mehrere Befestigungspunkte hat, an denen der Grundkörper mit dem Aggregat verbunden werden kann. Der Grundkörper kann beispielsweise aus einem metallischen Werkstoff, beispielsweise als Leichtmetallgussbauteil oder in Form eines Blechformteils aus Stahlblech hergestellt sein, wobei die Herstellung aus Kunststoff, insbesondere faserverstärkten Kunststoff ebenso denkbar ist. Der erste und/oder zweite Spannarm können aus einem metallischen Werkstoff, insbesondere einem Stahlwerkstoff oder Leichtmetallguss hergestellt sein, wobei auch hier die Herstellung aus einem Kunststoff, insbesondere faserverstärkten Kunststoff ebenso möglich ist.

Nach einer ersten Möglichkeit kann die Spannvorrichtung so gestaltet sein, dass die Lagerung der Spannarme im Bereich zwischen dem Befestigungsabschnitt des Grundkörpers und der Riemenebene liegt. Dies gilt auch für die Federanordnung, welche die Spannarme gegeneinander vorspannt, welche ebenfalls zwischen der Mittelebene des Riemens und dem Befestigungsabschnitt liegt. Die Riemenebene entspricht etwa der Lagermittelebene, welche durch die Lager der Spannrollen an den Spannarmen definiert ist. Eine weitere Lagermittelebene ist durch die Lager der Spannarme an dem Grundkörper gebildet.

Nach einer zweiten Möglichkeit kann die Riemenspannvorrichtung so gestaltet sein, dass die Lagerung der Spannarme am Grundkörper von dem Aggregat aus betrachtet hinter der Riemenebene liegt. Hiermit ist gemeint, dass eine Mittelebene der Spannarmlagerung gegenüber der Mittelebene des Riemens in Richtung von dem Aggregat weg axial versetzt angeordnet ist. Die zweite Lagermittelebene und die Befestigungsmittel zum Befestigen des Grundkörpers sind bei dieser Möglichkeit auf unterschiedlichen Seiten der ersten Lagermittelebene der Spannrollen angeordnet.

Die Spannvorrichtung kann für einen Riementrieb verwendet werden, der zumindest ein Aggregat mit einer Antriebswelle und einer Riemenscheibe sowie einen endlosen Riemen zum Antreiben der Riemenscheibe aufweist. Die Spannvorrichtung ist insbesondere so gestaltet, dass die beiden Schwenkachsen der Spannarme innerhalb der Öffnung des Gehäuses liegen. In eingebautem Zustand der Riemenspannvorrichtung an dem Aggregat liegen die beiden Schwenkachsen vorzugsweise innerhalb eines größten Außendurchmessers der Riemenscheibe beziehungsweise der Antriebswelle, insbesondere koaxial hierzu. Die beiden Schwenkachsen können koaxial zueinander angeordnet sein, das heißt eine gemeinsame Schwenkachse bilden, oder auch einen Versatz relativ zueinander haben.

Bevorzugte Ausführungsbeispiele werden nachstehend anhand der Zeichnungsfiguren erläutert. Hierin zeigt
- Figur 1A: eine erfindungsgemäße Riemenspannvorrichtung in einer ersten Ausführungsform in einer ersten perspektivischen Ansicht in einer ersten Winkelstellung innerhalb des ersten Spannwinkelbereichs;
- Figur 1B: die Riemenspannvorrichtung gemäß Figur 1A in einer zweiten Winkelstellung, in der die zweite Feder aktiviert wird;
- Figur 1C: die Riemenspannvorrichtung in der in Figur 1B gezeigten Winkelstellung in einer weiteren perspektivischen Ansicht;
- Figur 1D: die Einstellmittel aus den Figuren 1A bis 1C als Detail im Längsschnitt;
- Figur 2: ein Moment-Winkel-Diagramm des effektiven Spannmoments Meff über dem Spannwinkel a;
- Figur 3A: eine erfindungsgemäße Riemenspannvorrichtung in einer zweiten Ausführungsform in einer ersten perspektivischen Ansicht von halbschräg vorne in der Winkelstellung, in der die zweite Feder aktiviert wird;
- Figur 3B: die Riemenspannvorrichtung gemäß Figur 3A in einer weiteren perspektivischen Ansicht von unten;
- Figur 4A: eine erfindungsgemäße Riemenspannvorrichtung in einer dritten Ausführungsform in einer ersten perspektivischen Ansicht von halbschräg vorne in einer Winkelstellung, in der die zweite Feder aktiviert wird;
- Figur 4B: die Riemenspannvorrichtung aus Figur 4A mit von dem ersten Spannarm abgenommener Spannrolle;
- Figur 4C: die Riemenspannvorrichtung gemäß Figur 4A in einer weiteren perspektivischen Ansicht von unten;
- Figur 5A: eine erfindungsgemäße Riemenspannvorrichtung in einer weiteren Ausführungsform, mit teilweise geschnittener Federeinheit, in einer perspektivischen Ansicht von halbschräg vorne in einer Winkelstellung, in der die zweite Feder aktiviert wird;
- Figur 5B: die Riemenspannvorrichtung aus Figur 5A in einer weiteren perspektivischen Ansicht; und
- Figur 5C: die Riemenspannvorrichtung gemäß Figur 5A und 5B im Längsschnitt durch die Drehachsen der Spannrollen.

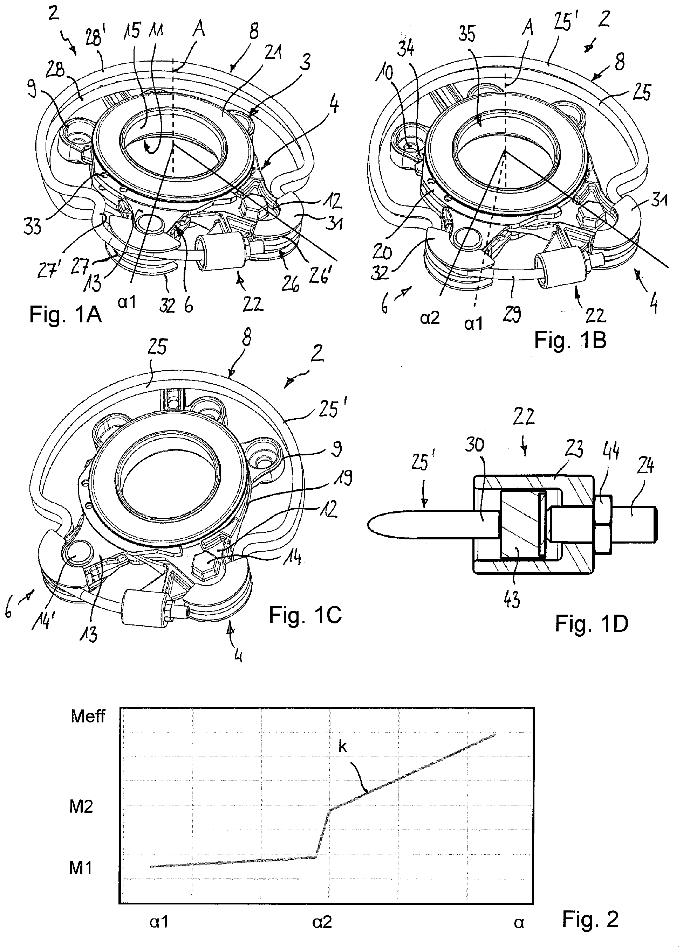

Die Figuren 1A bis 1C, welche zusammen mit Figur 2 im Folgenden gemeinsam beschrieben werden, zeigen eine erfindungsgemäße Riemenspannvorrichtung 2 in einer ersten Ausführungsform. Die Riemenspannvorrichtung 2 umfasst einen Grundkörper 3, einen ersten Spannarm 4, einen zweiten Spannarm 6 und eine Federanordnung 8, über welche die beiden Spannarme 4, 6 in Drehrichtung gegeneinander federnd abgestützt sind. Jeder der beiden Spannarme 4, 6 trägt eine zugehörige Spannrolle, die jeweils um eine zugehörige Drehachse drehbar am Spannarm gelagert sind. Die Spannrollen sind zur Vereinfachung bei der vorliegenden Ausführungsform nicht dargestellt.

Der Grundkörper 3 kann an einem ortsfesten Bauteil wie einem Aggregat befestigt werden. Das Aggregat kann prinzipiell jede Maschine sein, die Teil des Riementriebes ist, das heißt insbesondere jedes der vom Hauptmotor des Kraftfahrzeugs angetriebenen Nebenaggregate wie Generator, Wasserpumpe oder dergleichen. Zur Verbindung mit dem ortsfesten Bauteil hat der Grundkörper 3 mehrere Befestigungsabschnitte 9, die vorliegend in Form von nach radial außen vorstehenden Flanschvorsprüngen mit Bohrungen 10 gestaltet sind, durch die Schrauben zur Befestigung an dem ortsfesten Bauteil durchgesteckt werden können. Die Spannarme 4, 6 sind an dem Grundkörper 3 drehbar gelagert. Dabei kann beispielsweise vorgesehen sein, dass der erste Spannarm 4 mittels eines ersten Lagers um eine erste Schwenkachse schwenkbar gelagert ist, und der zweite Spannarm 6 mittels eines zweiten Lagers um eine zweite Schwenkachse schwenkbar gelagert ist. Vorliegend sind die beiden Spannarme 4, 6 koaxial zueinander angeordnet, das heißt die beiden individuellen Schwenkachsen fallen zusammen. Grundsätzlich ist es jedoch für bestimmte Anwendungen auch denkbar, dass die beiden Schwenkachsen parallel beziehungsweise exzentrisch zueinander angeordnet sein können.

Der Grundkörper 3 hat vorliegend einen Ringabschnitt 11, an dem die beiden Spannarme 4, 6 zumindest mittelbar axial abgestützt sind, und einen Hülsenabschnitt 15, an dem der erste beziehungsweise zweite Spannarm 4, 6 radial gelagert ist. Am freien axialen Ende des Hülsenabschnitts 15 ist eine Ringscheibe 21 als Abschluss fixiert. Dies erfolgt vorliegend durch Umbördeln eines endseitigen Randes des Hülsenabschnitts 15, wobei andere Befestigungsmethoden ebenso denkbar sind. Die Ringscheibe 21 bildet eine Stützfläche zur axialen Abstützung des ersten beziehungsweise zweiten Spannarms 4, 6 in entgegengesetzter axialer Richtung zum Ringabschnitt 11. Insgesamt bilden die Ringscheibe 21, der Hülsenabschnitt 15 und der Ringabschnitt 11 eine im Halblängsschnitt etwa C-förmige Aufnahme für die beiden Spannarme 4, 6.

Der Grundkörper 3, der erste Spannarm 4 und der zweite Spannarm 6 sind vorliegend als Gussbauteile aus einem metallischen Material ausgeführt, beispielsweise als Druckgussbauteile aus einem Leichtmetall, wobei auch andere Ausführungen aus Stahl oder Kunststoff möglich sind.

Die sich in Umfangsrichtung um die Schwenkachse A erstreckende Federanordnung 8 wirkt einer relativen Schwenkbewegung der beiden Spannarme 4, 6 entgegen. Die beiden Spannarme 4, 6 sind durch die zwischengeschaltete Federanordnung 8 relativ zueinander begrenzt drehbar und zusammen mit der Federanordnung 8 gegenüber dem Grundkörper 3 um die Achse A frei drehbar, das heißt um 360° und mehr. In an dem ortsfesten Bauteil montiertem Zustand ist diese freie Drehbarkeit nur insoweit gegeben wie es die Einbaulage zulässt. Es ist vorgesehen, dass die Schwenkachse A innerhalb einer Öffnung 35 des Grundkörpers 3 liegt.

Die Spannarme 4, 6 haben jeweils einen Trägerabschnitt 12, 13, der von einem Ringabschnitt 19, 20 des jeweiligen Spannarms 4, 6 nach radial außen vorsteht. An dem Trägerabschnitt 12, 13 ist jeweils eine zugehörige Spannrolle 5, 7 befestigt und mittels entsprechender Lager um zur Schwenkachse A parallele Drehachsen drehbar gelagert. Die Rollenlager sind jeweils über Schraubmittel 14, 14' mit dem jeweiligen Trägerabschnitt 12, 13 verbunden.

Im Folgenden wird näher auf die Federanordnung 8 der Spannvorrichtung 2 eingegangen.

Die Federanordnung 8 umfasst eine erste Feder 25 und eine zweite Feder 25', die insbesondere in funktionaler Parallelschaltung zwischen dem ersten und zweiten Spannarm wirkend angeordnet sind. Die erste Feder 25 ist mit dem ersten Federende 26 gegen den ersten Spannarm 4 und mit ihrem entgegengesetzten zweiten Federende 27 gegen den zweiten Spannarm 6 in Umfangsrichtung abgestützt. Zwischen den beiden Spannarmen 4, 6 ist ein Spannwinkel α eingeschlossen, der sich je nach vom Riemen auf die Spannrollen wirkenden Spannkräften verändert. Wenn die Spannarme 4, 6 relativ zueinander aufgrund von auftretenden oder wechselnden Trumkräften verschwenkt werden, wird die Feder 25 aufgeweitet und beaufschlagt die beiden Spannarme 4, 6 aufeinander zu.

Im Gleichgewichtszustand beziehungsweise bei Nominallast ist ein erster Spannwinkel α1 zwischen den beiden Spannarmen 4, 6 definiert. Die zweite Feder 25' ist derart gestaltet und eingebaut, dass die beiden Spannarme 4, 6 im Gleichgewichtszustand beziehungsweise bei Nominallast in einem Bereich um den ersten Spannwinkel (α1) nur von der ersten Feder 25 gegeneinander kraftbeaufschlagt sind, während die zweite Feder 25' keine Kraft zwischen den beiden Spannarmen 4, 6 ausübt beziehungsweise abstützungsfrei gegenüber dem zweiten Spannarm 6 ist. Dies gilt bei relativen Schwenkbewegungen der beiden Spannarme 4, 6 innerhalb eines ersten Spannwinkelbereichs (α < α2).

Bei Verschwenken der beiden Spannarme 4, 6 hin zu größeren Spannwinkelbereichen (α > α2) wird die zweite Feder 25' aktiviert, so dass die Spannarme 4, 6 in diesem zweiten Spannwinkelbereich von der ersten Feder 25' und zusätzlich von der zweiten Feder 25' gegeneinander kraftbeaufschlagt werden. Entsprechend steigt das effektive Federmoment Meff von einem geringeren Moment M1, das innerhalb des ersten Spannwinkelbereichs (α < α2) anliegt, sprunghaft zu einem größeren Moment M2, das innerhalb des zweiten Spannwinkelbereichs (α > α2) anliegt. Dieser Sachverhalt geht aus dem in Figur 2 gezeigten Diagramm hervor, dass die resultierende Federkennlinie k über dem Spannwinkel α zeigt.

Um den Winkel α2 einzustellen, bei dem ein Anstieg des Federmoments M erfolgt, sind entsprechende Einstellmittel 22 vorgesehen, die auch als Einstelleinheit bezeichnet werden können. Die Einstellmittel 22, die im Detail in Figur 1D gezeigt sind, umfassen einen Hülsenkörper 23, der fest mit dem ersten Spannarm 4 verbunden ist, ein Einstellelement 24, das gegenüber dem Hülsenkörper 23 verstellbar ist, und ein von dem Einstellelement 24 bewegbaren Anlagekörper 43, gegen den das Federende 30 der zweiten Feder 25' abstützbar ist. Das Einstellelement 24 ist vorliegend in Form einer Schraube gestaltet, die in eine Gewindebohrung des Hülsenkörpers 23 eingeschraubt und mittels einer Kontermutter 44 gegen ungewünschtes Verdrehen drehgesichert ist. Das federseitige Ende des Einstellelements 24 ist mit dem Anlagekörper 43 zur gemeinsamen Bewegung verbunden, beispielsweise mittels einer Schraub- und/oder Rastverbindung. Wenn der zweite Spannarm 6 im ersten Spannwinkelbereich (α < α2) relativ zum ersten Spannarm 4 liegt, befindet sich das Federende 30 in der Hülse 23 und ist gegen den Anlagekörper 43 und damit den ersten Spannarm 4 in Umfangsrichtung abgestützt. Mit den Einstellmitteln 24 kann der zweite Winkel α2 beziehungsweise der Winkelbereich eingestellt werden, bis zu dem nur die erste Feder 25 wirksam ist beziehungsweise ab dem die zweite Feder 25' aktiviert wird. Hiermit lassen sich Fertigungstoleranzen der Spannvorrichtung 2 sowie generelle Toleranzen im Riementrieb, wie Positionstoleranzen der Aggregate oder Längentoleranzen des Riemens, ausgleichen.

Um eine ungewünschte Geräuschentwicklung bei erneutem Rückfedern und in Kontaktkommen gegen den ersten Spannarm 4 zu vermeiden, sind Dämpfungsmittel vorgesehen. Die Dämpfungsmittel sind vorliegend integral mit dem Anlagekörper 43 ausgestaltet. Dies wird dadurch bewerkstelligt, dass der Anlagekörper 43 als elastischer Körper gebildet ist, so dass dieser gleichzeitig Dämpfungsfunktion beim Anschlagen des Federendes 30 hat.

Die erste Feder 25 ist in Form einer Bügelfeder gestaltet, welche mit einem ersten Stützabschnitt 26 an dem ersten Spannarm 4 und mit einem zweiten Stützabschnitt 27 an dem zweiten Spannarm 6 in Umfangsrichtung abgestützt ist. Die Stützabschnitte 26, 27 bilden die Enden der Bügelfeder 25 und können daher auch als Endabschnitte bezeichnet werden. Die Endabschnitte sind bogenförmig gestaltet und greifen in entsprechende Umfangsnuten eines jeweils mit dem zugehörigen Spannarm 4, 6 verbundenen Stützelements 31, 32 ein. Die Stützelemente 31, 32 sind jeweils mit dem jeweils zugehörigen Trägerelement 12, 13 des Spannarms 4, 6 verbunden, beispielsweise angeformt oder aufgesteckt. Durch den formschlüssigen Eingriff der Endabschnitte 26, 27 in den zugehörigen Stützelementen 31, 32 wird die Bügelfeder 25 in axialer Richtung und in Umfangsrichtung fixiert. Zwischen den beiden Stützabschnitten 26, 27 erstreckt sich der freie Federabschnitt 28 der Bügelfeder 25, in dem beim Aufweiten der Feder potentielle Energie gespeichert wird. Die Bügelfeder 25 ist in Bezug auf eine sich zwischen den beiden Endabschnitte erstreckende Mittelebene spiegelsymmetrisch gestaltet. Die Bügelfeder 25 hat eine Umfangserstreckung von weniger als 360° um die Schwenkachse A. Dabei ist ein mittlerer Radius des Federabschnitts 28 der Bügelfeder 25 größer ist als ein größter Radius der der Ringabschnitte 19, 20 beiden Spannarme 4, 6.

Die zweite Feder 25' ist bei der vorliegenden Ausführungsform ebenfalls als Bügelfeder ausgestaltet und entspricht hinsichtlich ihrer Form im Wesentlichen der ersten Feder 25. Ein Unterschied zur ersten Feder 25 besteht lediglich darin, dass sich die zweite Feder 25' über den zweiten Stützabschnitt 27' hinaus in Umfangsrichtung in Richtung zum ersten Spannarm 4 fortsetzt. Dabei ist das zweite Federende 30 der zweiten Feder 25' innerhalb des ersten Spannwinkelbereichs (α < α2) gegen den Anlagekörper 24 der Einstellmittel 23 abgestützt. Beim Aufspreizen der beiden Spannarme 4, 6 und bei Erreichen des zweiten Spannwinkels (α = α2) legt sich der zweite Stützabschnitt 27' gegen das Stützelement 32 an und wird bei weiter größer werdendem Spannwinkel von dem zweiten Spannarm 6 mitgenommen, wobei die zweite Feder 25' aufgeweitet wird. Zwischen dem zweiten Stützabschnitt 27' und dem freien Federende 30 hat die zweite Feder 25' einen Führungsabschnitt 29, der mit dem Stützelement 32 beim Verschwenken der Spannarme 4, 6 innerhalb des ersten Spannwinkelbereichs (α < α2) führend zusammenwirkt. Der Führungsabschnitt 29 ist so geformt, dass die zweite Feder 25' bei Relativbewegung zum zweiten Spannarm 6 am Stützelement 32 des zweiten Spannarms 6 axial abgestützt beziehungsweise geführt ist. Die Stützelemente 31, 32 sind vorliegend in Form von an den jeweiligen Spannarm 4, 6 angespritzten Kunststofflagerschalen gestaltet, wobei andere Abstützungen ebenso denkbar sind.

Die Bügelfedern 25, 25' stehen im Einbauzustand unter starker Druckvorspannung in Umfangsrichtung, das heißt die Federn sind gegenüber ihrem entspannten Zustand aufgeweitet, wobei die erste Feder 25 die beiden Spannarme 4, 6 in Richtung aufeinander zu beaufschlagt. Zum (vorübergehenden) Fixieren der vorgespannten Stellung werden die Spannarme 4, 6 entgegen der Vorspannkraft der Federn voneinander weg bewegt und ein Sicherungsstift in eine erste Bohrung 33 im ersten Spannarm 4 und eine zweite Bohrung 34 im zweiten Spannarm 6 eingesteckt. Nach dem Montieren der Riemenspannvorrichtung 2 an dem Aggregat und Auflegen des Riemens wird der Sicherungsstift gezogen, so dass die Spannarme 4, 6 von den Bügelfedern 25, 25' in Umfangsrichtung aufeinander zu beaufschlagt werden. Dabei stützt sich die zweite Bügelfeder 25' im Nominalbetrieb in Umfangsrichtung gegen den ersten Spannarm 4 ab und erzeugt keine Spannwirkung auf die Spannrollen, während die erste Feder 25 die Spannrollen 5, 7 und damit den Riemen vorspannt.

In einer hier nicht gezeigten abgewandelten Ausführungsform kann die erste und/oder zweite Feder 25, 25' so gestaltet sein, dass eine axiale Gesamtlänge der Federanordnung 8 größer ist als die axiale Länge der Federanordnung 8 im Bereich der Spannrollen 5, 7, beziehungsweise im Bereich der Stützabschnitte 26, 27. Dies kann beispielswese dadurch erreicht werden, dass ein den Spannrollen 5, 7 gegenüberliegender Teilbereich des Federabschnitts 28 gegenüber dem ersten und zweiten Stützabschnitt 26, 27 axial in Richtung vom Befestigungsabschnitt 9 des Grundkörpers 3 weg versetzt ist. Hierfür kann der Federabschnitt 28 zwischen den beiden Stützabschnitten 26, 27 in Bezug auf die Schwenkachse A eine axiale Steigungskomponente. Auf diese Weise wird erreicht, dass der Federabschnitt 28 gegenüber benachbarten Bauteilen einen größeren axialen Abstand aufweist und gegenüber diesen auch bei auftretenden Vibrationen berührungslos ist.

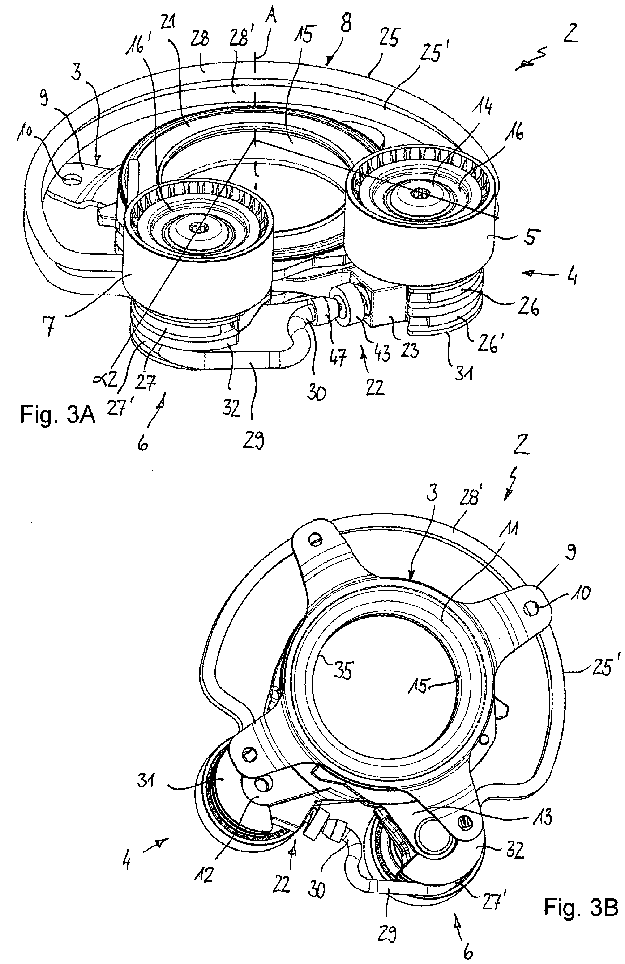

In den Figuren 3a und 3B ist eine erfindungsgemäße Spannvorrichtung 2 in einer weiteren Ausführungsform gezeigt. Die vorliegende Ausführungsform entspricht hinsichtlich Aufbau und Funktionsweise weitestgehend der Spannvorrichtung aus Figur 1, auf deren Beschreibung hinsichtlich der Gemeinsamkeiten insofern Bezug genommen wird. Dabei sind gleiche beziehungsweise einander entsprechende Bauteile mit gleichen Bezugszeichen versehen wie in Figur 1. Zusätzlich sind weitere Details erkennbar, wie beispielsweise die an den Spannarmen 4, 6 angebrachten Spannrollen 5, 7 sowie Scheiben 16, 16', die das Eindringen von Schmutz in die Lager der Spannrollen 5, 7 verhindern.

Ein Unterschied der vorliegenden Ausführung nach Figur 3 liegt in der Ausgestaltung der Einstelleinheit 22. Die Einstelleinheit 22 umfasst vorliegend einen Anlagekörper 43, der gegenüber einem Stützelement 23 abgestützt und mit diesem verstellbar verbunden ist. Der Anlagekörper 43 ist über nicht näher dargestellte Schraubmittel gegenüber dem Stützkörper 23 verstellbar. Auf diese Weise kann die Stützfläche des Anlagekörpers 43, gegen sich die Feder 25' im Nominalbetrieb abstützt, in Umfangsrichtung verstellt werden, so dass der Aktivierungspunkt, an dem das Spannmoment zunimmt entsprechend eingestellt werden kann. Am Federende 30 sind Dämpfungsmittel 47 vorgesehen, die hier in Form eines Dämpfungsgummis gestaltet sind. Dadurch, dass das Federende 30 mit einem Dämpfer versehen ist, wird ein Aufprall des Federendes 30 gegen den Anlagekörper 43 abgedämpft und die Entstehung von ungewünschten Geräuschen verhindert.

Ein weiterer kleinerer Unterschied liegt in der Ausgestaltung des Grundkörpers 3 und der Befestigungsmittel 9. Der Grundkörper 3 ist vorliegend als Blechumformteil, beispielsweise aus Stahlblech hergestellt. Es sind vorliegend vier Befestigungspunkte 9 über dem Umfang vorgesehen, wobei es sich versteht, dass die Anzahl und Ausgestaltung von den Bauraumverhältnissen am Aggregat abhängt.

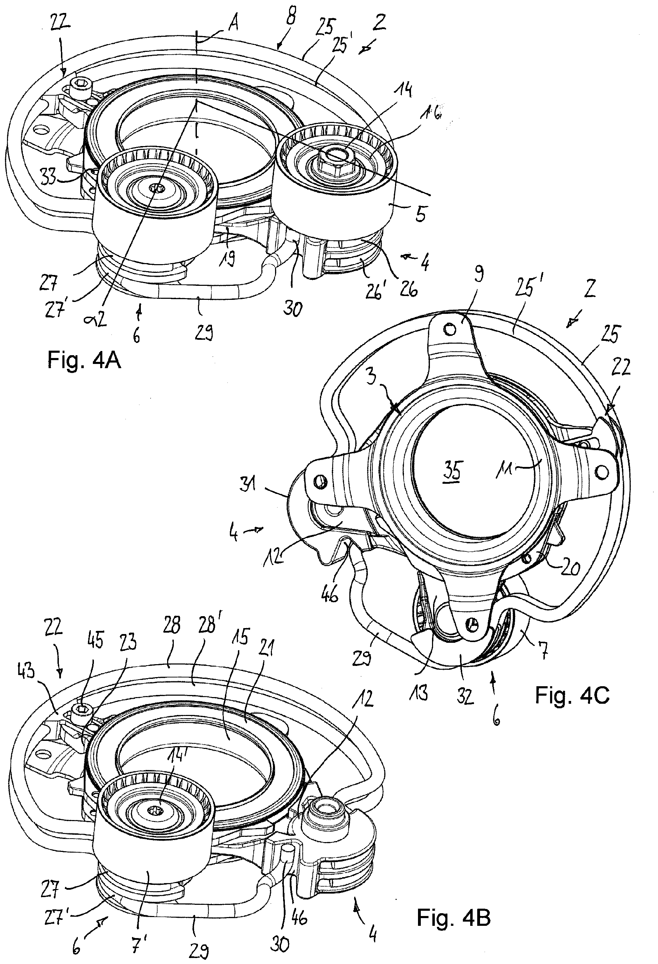

Die Figuren 4A bis 4C zeigen eine erfindungsgemäße Riemenspannvorrichtung 2 in einer weiteren Ausführungsform. Die vorliegende Riemenspannvorrichtung 2 entspricht im Aufbau und Funktionsweise weitestgehend der Ausführungsform gemäß den Figuren 3A bis 3C, so dass hinsichtlich der Gemeinsamkeiten auf die obige Beschreibung Bezug genommen wird. Dabei sind gleiche beziehungsweise abgewandelte Bauteile mit gleichen Bezugszeichen versehen, wie in den obigen Figuren.

Ein Unterschied der vorliegenden Ausführung nach Figur 4 liegt in der Ausgestaltung der Einstelleinheit 22. Die Einstelleinheit 22 ist hier nicht am ersten Spannarm angeordnet, sondern in einem Umfangsbereich des freien Federabschnitts 28' zwischen den beiden Spannrollen 5, 7. Die Einstelleinheit 22 umfasst einen Anlagekörper 43, gegen den die Feder 25' radial und axial abgestützt ist, sowie ein Trägerelement 23, das mit einem der Spannarme 4, 6, insbesondere dem zweiten Spannarm 6 fest verbunden ist. Der Anlagekörper 43 ist in Form einer justierbaren Lagerschale gestaltet und gegenüber dem Trägerelement 23 radial verstellbar. Hierfür hat der Anlagekörper 43 ein Langloch, durch das eine Schraube 45 einsteckbar und mit dem Trägerelement 23 verschraubbar ist. Das freie Federende 30 der zweiten Feder 25' ist unmittelbar am ersten Spannarm 4 in Umfangsrichtung abgestützt. Am Trägerelement 12 des ersten Spannarms 4 ist eine muldenförmige Stützfläche 46 vorgesehen, in die das Federende 30 eintauchen und in Anlage kommen kann. Das Federende 30 ist in axiale Richtung abgekröpft, ohne hierauf eingeschränkt zu sein.

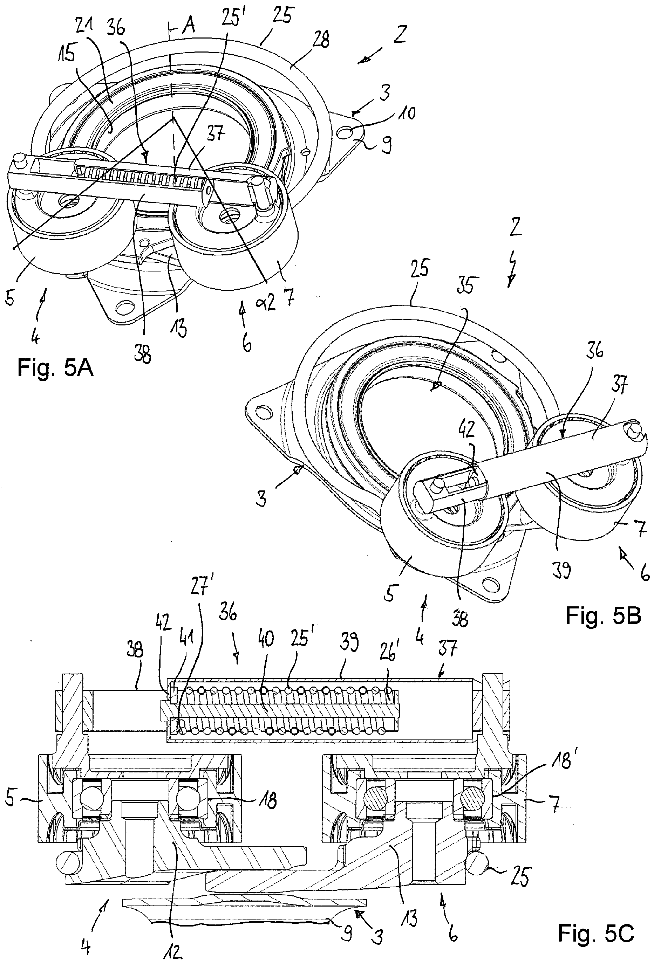

Die Figuren 5A bis 5C zeigen eine erfindungsgemäße Riemenspannvorrichtung 2 in einer weiteren Ausführungsform. Die vorliegende Riemenspannvorrichtung 2 entspricht hinsichtlich Aufbau und Funktionsweise in weiten Teilen der Ausführungsform gemäß den Figuren 3A bis 3C, so dass hinsichtlich der Gemeinsamkeiten auf die obige Beschreibung Bezug genommen wird. Dabei sind gleiche beziehungsweise abgewandelte Bauteile mit gleichen Bezugszeichen versehen, wie in den obigen Figuren.

Ein Unterschied besteht darin, dass die zweite Feder 25' nicht in Form einer die Öffnung 35 umgebende Bügelfeder gestaltet ist, sondern als Teil einer Teleskop-Federeinheit 36 ausgestaltet ist, die zwischen den beiden Spannarmen 4, 6 wirkend angeordnet ist. Die Teleskop-Federeinheit 36 umfasst eine teleskopierbare Halterung 37 mit einem ersten Teil 38 und einem zweiten Teil 39, die gegeneinander verschiebbar sind. Dabei ist ein erstes Ende 26' der zweiten Feder 25' gegen das erste Teil 38 der Teleskop-Halterung 37 axial abgestützt ist und das entgegengesetzte zweite Ende 27' der zweiten Feder 25' ist gegen das zweite Teil 39 der Teleskop-Halterung 37 axial abstützbar. Das erste Teil 38 der Teleskop-Halterung 37 ist an dem ersten Spannarm 4 schwenkbar abgestützt, während das zweite Teil 39 an dem zweiten Spannarm 6 schwenkbar abgestützt ist. Bei Schwenkbewegung der beiden Spannarme 4, 6 relativ zueinander verschieben sich die beiden Teile 38, 39 relativ zueinander, so dass sich die Länge der teleskopierbaren Halterung 37 verändert.

Die Feder 25' ist derart in der Halterung 37 mit Vorspannung eingebaut, dass die Feder 25' in einem ersten Teleskopwegbereich, der dem ersten Schwenkwinkelbereich (α < α2) der Spannarme 4, 6 entspricht, kraftfrei in Bezug auf eine Abstützung der beiden Spannarme 4, 6 ist, und in einem zweiten Teleskopwegbereich, der dem zweiten Schwenkwinkelbereich (α > α2) der Spannarme 4, 6 entspricht, aus der vorgespannten Position weiter beaufschlagt wird, so dass die zweite Feder 25' eine Federkraft zwischen den beiden Spannarmen 4, 6 ausübt. Die zweite Feder 25' ist vorliegend als Schraubenfeder gestaltet. Das erste Halteteil 38 umfasst ein Führungsteil 40, auf dem die zweite Feder 25' angeordnet ist, sowie eine Stützplatte 41, die auf dem Führungsteil 40 axial beweglich geführt ist und gegen die das zweite Federende 27' axial abgestützt ist. Das zweite Halteteil 39 hat eine Mitnahmefläche 42, die beim Auseinanderfahren der beiden Halteteile 38, 39 mit der Stützplatte 41 zusammenwirkt und diese mitnimmt. Auf diese Weise wird die zweite Feder 25' verkürzt, so dass eine zusätzliche Spannkraft beziehungsweise ein zusätzliches Spannmoment M2 auf die Spannarme 4, 6 ausgeübt wird.

Wie oben erläutert, können die genannten Spannvorrichtungen 2 mit einem Aggregat eines Riementriebes verbunden werden, beispielsweise mit einem Generator. Ein solches Aggregat umfasst üblicherweise eine Antriebsriemenscheibe die von einem endlosen Riemen antreibbar ist oder diese antreiben kann. Der Grundkörper 3 beziehungsweise die Spannvorrichtung 2 ist insbesondere derart gestaltet, dass - in montiertem Zustand der Spannvorrichtung 2 an das Aggregat - die Schwenkachse A der Spannarme 4, 6 innerhalb des Außendurchmessers der Antriebswelle, vorzugsweise im Wesentlichen koaxial zur Antriebsdrehachse, angeordnet ist.

Bei allen vorstehend beschriebenen Ausführungsformen besteht ein Vorteil darin, dass die nominale Spannkraft der Spannvorrichtung 2 möglichst gering ausgelegt werden kann. Im Normalbetrieb ist nur die erste Feder 25 zwischen den beiden Spannarmen 4, 6 wirksam, um diese gegeneinander zu beaufschlagen, während die zweite Feder 25' keine Kraft zwischen den beiden Spannarmen 4, 6 ausübt. Erst bei größeren Spannwinkeln, die in besonderen Fahrzuständen wie beispielsweise bei Zuschaltung eines Elektroantriebs (Boost) oder Rekuperieren von mechanischer in elektrische Energie auftreten können, wird die zweite Feder 25' aktiviert und erzeugt eine zusätzliche Spannkraft beziehungsweise Spannmoment zwischen den beiden Spannarmen 4, 6. Somit wird ein stufig verstellbarer Pendelarmspanner 2 zur winkelabhängigen Erhöhung der Trumkraft in Nebenaggregatetrieben bereitgestellt.

### Bezugszeichenliste

- 2: Riemenspannvorrichtung
- 3: Grundkörper
- 4: erster Spannarm
- 5: erste Spannrolle
- 6: zweiter Spannarm
- 7: zweite Spannrolle
- 8: Federanordnung
- 9: Befestigungsabschnitt
- 10: Bohrung
- 11: Ringabschnitt
- 12: Trägerabschnitt
- 13: Trägerabschnitt
- 14: Schraube
- 15: Hülsenabschnitt
- 16: Scheibe
- 17: Zwischenelement
- 18: Lager
- 19: Ringabschnitt
- 20: Ringabschnitt
- 21: Ringscheibe
- 22: Einstellmittel
- 23: Hülsenkörper
- 24: Einstellelement
- 25, 25': Feder
- 26, 26': Stützabschnitt
- 27, 27': Stützabschnitt
- 28, 28': Federabschnitt
- 29: Führungsabschnitt
- 30: Federende
- 31: Stützelement
- 32: Stützelement
- 33: Bohrung
- 34: Bohrung
- 35: Öffnung
- 36: Teleskop-Federeinheit
- 37: Halterung
- 38: erstes Teil
- 39: zweites Teil
- 40: Führungsteil
- 41: Stützplatte
- 42: Mitnahmefläche
- 43: Anlagekörper
- 44: Kontermutter
- 45: Schraube
- 46: Stützfläche
- 47: Dämpfungsmittel

- A: Achse

## Patentansprüche

1. Spannvorrichtung zum Spannen eines Zugmittels eines Zugmitteltriebs, umfassend:
einen Grundkörper (3);
einen ersten Spannarm (4), der an dem Grundkörper (3) schwenkbar gelagert ist und eine erste Spannrolle (5) trägt;
einen zweiten Spannarm (6), der an dem Grundkörper (3) schwenkbar gelagert ist und eine zweite Spannrolle (7) trägt;
eine Federanordnung (8) mit einer ersten Feder (25) und einer zweiten Feder (25'), die zwischen dem ersten und zweiten Spannarm (4, 6) wirkend angeordnet sind;
wobei die beiden Spannarme (4, 6) bei relativem Verschwenken innerhalb eines ersten Spannwinkelbereichs von der ersten Feder (25) gegeneinander kraftbeaufschlagt sind,
**dadurch gekennzeichnet,**
**dass** die zweite Feder (25') innerhalb des ersten Spannwinkelbereichs gegenüber zumindest einem der beiden Spannarme (4, 6) kraftfrei ist; und
**dass** die beiden Spannarme (4, 6) bei relativem Verschwenken innerhalb eines zweiten Spannwinkelbereichs, der größere Spannwinkel umfasst, als der erste Spannwinkelbereich, von der ersten Feder (25) und zusätzlich von der zweiten Feder (25') gegeneinander kraftbeaufschlagt werden.

2. Spannvorrichtung nach Anspruch 1, **dadurch gekennzeichnet, dass** die zweite Feder (25') mit einem ersten Federende (26') gegen den ersten Spannarm (4) in einer ersten Drehrichtung abgestützt ist und,
dass die zweite Feder (25') bei Spannwinkeln innerhalb des ersten Spannwinkelbereichs mit einem zweiten Federende (30) in der entgegengesetzten zweiten Drehrichtung gegen den ersten Spannarm (4) abgestützt ist, und dass die zweite Feder (25') im zweiten Spannwinkelbereich gegenüber dem ersten Spannarm (4) abstützungsfrei ist und gegen den zweiten Spannarm (6) in der zweiten Drehrichtung abgestützt ist.

3. Spannvorrichtung nach Anspruch 1 oder 2,
**dadurch gekennzeichnet,**
**dass** innerhalb des ersten Spannwinkelbereichs in einer Gleichgewichtsstellung zwischen dem ersten Spannarm (4) und dem zweiten Spannarm (6) ein erster Spannwinkel (α1) definiert ist, und/oder
**dass** ein zweiter Spannwinkel (α2) zwischen dem ersten Spannwinkelbereich und dem zweiten Spannwinkelbereich definiert ist, bei dem eine auf die Spannarme (4, 6) wirkende resultierende Federkraft sprunghaft ansteigt.

4. Spannvorrichtung nach Anspruch 3,
**dadurch gekennzeichnet, dass** der zweite Spannwinkel (α2) kleiner ist als die Summe aus erstem Spannwinkel (α1) plus 20°.

5. Spannvorrichtung nach einem der Ansprüche 1 bis 4,
**dadurch gekennzeichnet, dass** die zweite Feder (25') mit Vorspannung eingebaut ist.

6. Spannvorrichtung nach einem der Ansprüche 1 bis 5,
**dadurch gekennzeichnet,**
**dass** die erste Feder (25) beim größten Spannwinkel des ersten Spannwinkelbereichs eine erste Federkraft zwischen den beiden Spannarmen (4, 6) bewirkt und,
**dass** die zweite Feder (25') bei einem kleinsten Spannwinkel des zweiten Spannwinkelbereichs eine zweite Federkraft zwischen den beiden Spannarmen (4, 6) bewirkt, die größer ist als ein Drittel der ersten Federkraft.

7. Spannvorrichtung nach einem der Ansprüche 1 bis 6,
**dadurch gekennzeichnet, dass** Einstellmittel (22) zum Einstellen des ersten Spannwinkelbereichs vorgesehen sind.

8. Spannvorrichtung nach einem der Ansprüche 1 bis 7,
**dadurch gekennzeichnet, dass** die zweite Feder (25') zwischen dem zweiten Federende (30) und dem zweiten Stützabschnitt (26') einen ausgeformten Führungsabschnitt (29) aufweist, an dem die zweite Feder (25') bei Verschwenken der beiden Spannarme (4, 6) innerhalb des ersten Spannwinkelbereichs gegenüber einem Stützelement (32) des zweiten Spannarms (6) axial abgestützt und geführt ist.

9. Spannvorrichtung nach einem der Ansprüche 1 bis 8,
**dadurch gekennzeichnet, dass** Dämpfungsmittel (43) vorgesehen sind, die eine Anschlagbewegung des zweiten Federendes (30) der zweiten Feder (25') gegen den ersten Spannarm (4) dämpfen.

10. Spannvorrichtung nach einem der Ansprüche 1 bis 9,
**dadurch gekennzeichnet, dass** die zweite Feder (25') in einer Teleskop-Halterung (37) aufgenommen ist, wobei ein erstes Ende der Teleskop-Halterung an dem ersten Spannarm (4) schwenkbar abgestützt ist und ein zweites Ende der Teleskop-Halterung (37) an dem zweiten Spannarm (6) schwenkbar abgestützt ist.

11. Spannvorrichtung nach Anspruch 10,
**dadurch gekennzeichnet, dass** die Teleskop-Halterung (37) ein erstes Teil (38) und ein zweites Teil (39) umfasst, die relativ zueinander teleskopierbar sind, wobei ein erstes Ende (26') der zweiten Feder (25') gegen das erste Teil (38) der Teleskop-Halterung (37) axial abgestützt ist und ein zweites Ende (27') der zweiten Feder (25') gegen das zweite Teil (39) der Teleskop-Halterung axial abstützbar ist.

12. Spannvorrichtung nach einem der Ansprüche 1 bis 11,
**dadurch gekennzeichnet, dass** zumindest die erste Feder (25, 25') einen ersten Stützabschnitt (26, 26') aufweist, der an dem ersten Spannarm (4) abgestützt ist, und einen zweiten Stützabschnitt (27, 27'), der an dem zweiten Spannarm (6) zumindest abstützbar ist, sowie einen sich zwischen dem ersten Stützabschnitt (26, 26') und dem zweiten Stützabschnitt (27, 27') erstreckenden bogenförmigen Federabschnitt (28, 28').

13. Spannvorrichtung nach einem der Ansprüche 1 bis 12,
**dadurch gekennzeichnet,**
**dass** zumindest die erste Feder (25, 25') in Form einer Bügelfeder gestaltet ist, die eine Umfangserstreckung von weniger als 360° um eine Schwenkachse (A) der Spannarme (4, 6) aufweist.

14. Spannvorrichtung nach einem der Ansprüche 1 bis 13,
**dadurch gekennzeichnet,**
**dass** der Grundkörper (3) eine Öffnung (35) aufweist, die ausgestaltet ist, dass eine Antriebswelle und/oder Antriebsriemenscheibe eines Aggregats sich in die Öffnung (35) berührungslos hineinerstrecken kann.

15. Spannvorrichtung nach einem der Ansprüche 1 bis 14,
**dadurch gekennzeichnet,**
**dass** die Spannrollen (5, 7) eine zu den Rollenachsen senkrechte Spannrollenmittelebene definieren, und dass die Lagerung der Spannarme (4, 6) eine zur Schwenkachse (A) senkrechte Lagermittelebene definiert,
wobei die Lagermittelebene und die Befestigungsmittel (9) zum Befestigen des Grundkörpers (3) auf unterschiedlichen Seiten der Spannrollenmittelebene angeordnet sind, oder
wobei die Spannrollenmittelebene und die Befestigungsmittel (9) zum Befestigen des Grundkörpers (3) auf unterschiedlichen Seiten der Lagermittelebene angeordnet sind.

## Claims

1. Tensioning device for tensioning traction means of a traction drive, comprising:
a base member (3);
a first tensioning arm (4), pivotably supported on the base member (3) and carrying a first tensioning roller (5);
a second tensioning arm (6), pivotably supported on the base member (3) and
carrying a second tensioning roller (7);
a spring arrangement (8) with a first spring (25) and a second spring (25'), arranged to be effective between the first and the second tensioning arm (4, 6);
wherein the two tensioning arms (4, 6), when being pivoted relative to each other within a first tensioning angle range, are force-loaded against each other by the first spring (25),
**characterised in**
**that** the second spring (25') within the first tensioning angle range is force-free relative to at least one of the two tensioning arms (4, 6); and
**that** the two tensioning arms (4, 6), when being pivoted relative to each other within a second tensioning angle range comprising larger tensioning angles than the first tensioning angle range, are force-loaded against each other by the first spring (25) and additionally by the second spring (25').

2. Tensioning device according to claim 1,
**characterised in**
**that** the second spring (25') is supported with a first spring end (26') against the first tensioning arm (4) in a first rotational direction, and
**that** the second spring (25') at tensioning angles within the first tensioning angle range is supported with a second spring end (30) in the opposite second rotational direction against the first tensioning arm (4), and
**that** the second spring (25') in the second tensioning angle range is support-free relative to the first tensioning arm (4) and is supported against the second tensioning arm (6) in the second rotational direction.

3. Tensioning device according to claim 1 or 2,
charcterised in
that a first tensioning angle (α1) is defined within the first tensioning angle range in a balanced position between the first tensioning arm (4) and the second tensioning arm (6), and/or
that a second tensioning angle (α2) is defined between the first tensioning angle range and the second tensioning angle range, at which second tensioning angle (α2) a resulting spring force acting on the tensioning arms (4, 6) increases abruptly.

4. Tensioning device according to claim 3,
**characterised in**
**that** the second tensioning angle (α2) is smaller than the sum of the first tensioning angle (α1) plus 20º.

5. Tensioning device according to anyone of claims 1 to 4,
**characterised in**
**that** the second spring (25') is mounted with preload.

6. Tensioning device according to any of claims 1 to 5,
**characterised in**
**that** the first spring (25), at the largest tensioning angle of the first tensioning angle range, generates a first spring force between the two tensioning arms (4, 6), and
**that** the second spring (25'), at the smallest tensioning angle of the second tensioning angle range, generates a second spring force between the two tensioning arms (4, 6) that is larger than a third of the first spring force.

7. Tensioning device according to anyone of claims 1 to 6,
**characterised in**
**that** adjustment means (22) are provided for adjusting the first tensioning angle range.

8. Tensioning device according to anyone of claims 1 to 7,
**characterised in**
**that** the second spring (25') has a formed guiding portion (29) between the second spring end (30) and the second support portion (26'), by which guiding portion (29) the second spring (25') is axially supported and guided relative to a support element (32) of the second tensioning arm (6), when the two tensioning arms (4, 6) are pivoted within the first tensioning angle range.

9. Tensioning device according to anyone of claims 1 to 8,
**characterised in**
**that** damping means (43) are provided, which dampen an abutment movement of the second spring end (30) of the second spring (25') against the first tensioning arm (4).

10. Tensioning device according to anyone of claims 1 to 9,
**characterised in**
**that** the second spring (25') is accommodated in a telescope-retainer (37), wherein a first end of the telescope-retainer is pivotably supported on the first tensioning arm (4) and a second end of the telescope-retainer (37) is pivotably supported on the second tensioning arm (6).

11. Tensioning device according to claim 10,
**characterised in**
**that** the telescope-retainer (37) comprises a first part (38) and a second part (39), which are telescopic relative to each other, wherein a first end (26') of the second spring (25') is axially supported against the first part (38) of the telescope-retainer (37) and a second end (37') of the second spring (25') is axially supportable against the second part (39) of the telescope-retainer.

12. Tensioning device according to any of claims 1 to 11,
**characterised in**
**that** at least the first spring (25, 25') has a first support portion (26, 26'), which is supported on the first tensioning arm (4), and a second support portion (27, 27'), which is at least supportable on the second tensioning arm (6), as well as a curved spring portion (28, 28') extending between the first support portion (26, 26') and the second support portion (27, 27').

13. Tensioning device according to any of claims 1 to 12,
**characterised in**
**that** at least the first spring (25, 25') is formed as a bow spring, having a circumferential extension of less than 360º around a pivot axis (A) of the tensioning arms (4, 6).

14. Tensioning device according to anyone of claims 1 to 13,
**characterised in**
**that** the base member (3) has an opening (35) formed such that a drive shaft and/or drive belt pulley of an accessory can extend into the opening (35) in a contact-free manner.

15. Tensioning device according to any of claims 1 to 14,
**characterised in**
**that** the tensioning rollers (5, 7) form a tensioning roller centre plane perpendicular to the roller axes, and that the bearing of the tensioning arms (4, 6) forms a bearing centre plane perpendicular to the pivot axis (A),
wherein the bearing centre plane and the attachment means (9) for attaching the base member (3) are arranged on different sides of the tensioning roller centre plane, or
wherein the tensioning roller centre plane and the attachment means (9) for attaching the base member (3) are arranged on different sides of the bearing centre plane.

## Revendications

1. Dispositif tendeur pour tendre un moyen de traction d'un entraînement de moyen de traction:
un corps de base (3),
un premier bras de tension (4), qui est logé pouvant pivoter sur le corps de base (3) et porte un premier galet tendeur (5),
un deuxième bras de tension (6), qui est logé pouvant pivoter sur le corps de base (3) et porte un deuxième galet tendeur (7),
un système de ressorts (8) avec un premier ressort (25) et un deuxième ressort (25'), qui sont disposés agissant entre le premier et le deuxième bras de tension (4, 6),
sachant que les deux bras de tension (4, 6) sont chargés en force l'un contre l'autre par le premier ressort (25) lors d'un pivotement relatif à l'intérieur d'une première zone angulaire de tension,
**caractérisé en ce que**
le deuxième ressort (25') reste sans force à l'intérieur de la première zone angulaire tendeur par rapport au moins à un des deux bras de tension (4, 6), et
**en ce que** les deux bras de tension (4, 6) sont chargés par force l'un contre l'autre par le premier ressort (25) et en plus par le deuxième ressort (25'), lors d'un pivotement relatif à l'intérieur d'une deuxième zone angulaire tendeur, qui comprend des angles de tension plus grands que la première zone angulaire de tension.

2. Dispositif tendeur selon la revendication 1, **caractérisé en ce que**
le deuxième ressort (25') est appuyé avec une première extrémité de ressort (26') contre le premier bras de tension (4) dans une première direction de rotation et, **en ce que** le deuxième ressort (25') est appuyé contre le premier bras de tension (4) pour des angles de tension à l'intérieur de la première zone angulaire de tension avec une deuxième extrémité de ressort (30) dans la direction de rotation opposée, et
**en ce que** le deuxième ressort (25') est sans appui par rapport au premier bras de tension (4) dans la deuxième zone angulaire de tension et est appuyé contre le deuxième bras de tension (6) dans la deuxième direction de rotation.

3. Dispositif tendeur selon la revendication 1 ou 2, **caractérisé en ce qu'**
à l'intérieur de la première zone angulaire de tension, un premier angle de tension (α1) est défini dans une position d'équilibre entre le premier bras de tension (4) et le deuxième bras de tension (6), et/ou en ce qu'un deuxième angle de tension (α2) est défini entre la première zone angulaire de tension et la deuxième zone angulaire de tension, pour lequel une force de ressort résultante agissant sur les bras de tension (4, 6) augmente brusquement.

4. Dispositif tendeur selon la revendication 3, **caractérisé en ce que**
le deuxième angle de tension (α2) est plus petit que le total du premier angle de tension (α1) plus 20°.

5. Dispositif tendeur selon l'une quelconque des revendications 1 à 4,
**caractérisé en ce que**
le deuxième ressort (25') est monté avec une prétension.

6. Dispositif tendeur selon l'une quelconque des revendications 1 à 5,
**caractérisé en ce que**
le premier ressort (25) exerce une première force de ressort entre les deux bras de tension (4, 6) pour des angles de tension maximaux de la première zone angulaire de tension et,
et
**en ce que** le deuxième ressort (25') exerce une deuxième force de ressort entre les deux bras de tension (4, 6) pour un angle de tension minimal de la deuxième zone angulaire de tension, qui est plus grande qu'un tiers de la première force de ressort.

7. Dispositif tendeur selon l'une quelconque des revendications 1 à 6,
**caractérisé en ce que** des moyens de réglage (22) sont prévus pour le réglage de la première zone angulaire de tension.

8. Dispositif tendeur selon l'une quelconque des revendications 1 à 7,
**caractérisé en ce que** le deuxième ressort (25') comporte une section de guidage (29) conformée entre la deuxième extrémité de ressort (30) et la deuxième section de support (26') sur laquelle le deuxième ressort (25') est axialement appuyé et guidé lors du pivotement des deux bras de tension (4, 6) à l'intérieur de la première zone angulaire de tension par rapport à un élément de support (32) du deuxième bras de tension (6).

9. Dispositif tendeur selon l'une quelconque des revendications 1 à 8,
**caractérisé en ce que** des moyens d'amortissement (43) sont prévus, qui amortissent un mouvement de butée de la deuxième extrémité de ressort (30) du deuxième ressort (25') contre le premier bras de tension (4).

10. Dispositif tendeur selon l'une quelconque des revendications 1 à 9, **caractérisé en ce que** le deuxième ressort (25') est logé dans un support télescopique (37), sachant qu'une première extrémité du support télescopique est appuyée pouvant pivoter sur le premier bras de tension (4) et une deuxième extrémité du support télescopique (37) est appuyée pouvant pivoter sur le deuxième bras de tension (6).

11. Dispositif tendeur selon la revendication 10, **caractérisé en ce que** le support télescopique (37) comprend une première partie (38) et une deuxième partie (39), qui sont télescopables l'une par rapport à l'autre, sachant qu'une première extrémité (26') du deuxième ressort (25') est axialement appuyée contre la première partie (38) du support télescopique (37) et une deuxième extrémité (27') du deuxième ressort (25') peut être axialement appuyée contre la deuxième partie (39) du support télescopique.

12. Dispositif tendeur selon l'une quelconque des revendications 1 à 11,
**caractérisé en ce qu'**au moins le premier ressort (25, 25') comporte une première section de support (26, 26'), qui est appuyée sur le premier bras de tension (4) et une deuxième section de support (27, 27'), qui peut être appuyée au moins sur le deuxième bras de tension (6) ainsi qu'une section faisant ressort (28, 28') en forme d'arc s'étendant entre la première section de support (26, 26') et la deuxième section de support (27, 27).

13. Dispositif tendeur selon l'une quelconque des revendications 1 à 12,
**caractérisé en ce qu'**
au moins le premier ressort (25, 25') est configuré sous la forme d'un ressort en étrier, qui comporte une extension périphérique de moins de 360° autour d'un axe de pivotement (A) des bras de tension (4, 6).

14. Dispositif tendeur selon l'une quelconque des revendications 1 à 13,
**caractérisé en ce que**
le corps de base (3) comporte une ouverture (35), qui est structurée de telle sorte qu'un arbre d'entraînement et/ou une poulie à courroie d'entraînement d'un ensemble peut/peuvent s'étendre sans contact dans l'ouverture (35).

15. Dispositif tendeur selon l'une quelconque des revendications 1 à 14,
**caractérisé en ce que**
les galets tendeurs (5, 7) définissent un plan médian de galet tendeur perpendiculaire par rapport aux axes de galets et **en ce que** le logement des bras de tension (4, 6) définit un plan médian de logement perpendiculaire à l'axe de pivotement (A),
sachant que le plan médian de logement et les moyens de fixation (9) pour fixer le corps de base (3) sont disposés sur différents côtés du plan médian de galet tendeur, ou
sachant que le plan médian de galet tendeur et les moyens de fixation (9) pour fixer le corps de base (3) sont disposés sur différents côtés du plan médian de logement.
